# EUROPEAN PATENT APPLICATION

(11) **EP 0 976 498 A2**
(43) Date of publication of application: **02.02.2000**
(21) Application number: 99114525.1
(22) Date of filing: 23.07.1999
(51) Int. Cl.: B24B 41/04, B23Q 1/26

(54) **Machining unit for a grinding machine**

(30) Priority: 28.07.1998 IT TO980656
(71) Applicant: TACCHELLA MACCHINE S.p.A., I-15011 Acqui Terme (IT)
(72) Inventor: Tacchella, Claudio, 15011 Acqui Terme (IT)
(74) Representative: Cerbaro, Elena, Dr.

(57) **Abstract**

A machining unit (1, 1') for a grinding machine, the unit having an operating head (2) supporting for rotation a number of spindles (18, 19, 30, 31) and a number of grinding wheels (3, 4, 5, 32, 33) made of cubic boron crystal; a first and a second carriage (6, 8) fitted, crosswise to each other, to a bed of the machine and supporting the operating head to move the operating head parallel to a first and a second direction (Z, X); and a movable member (10) which is interposed between one (8) of the carriages and the operating head (2), rotates the operating head (2) in a plane parallel to the first and second direction (Z, X), and cooperates with the first and second carriage to position each of the grinding wheels (3, 4, 5, 32, 33) with respect to an axially symmetrical workpiece (24, 37) for grinding.

## Description

The present invention relates to a machining unit for a grinding machine.

Machining units of the above type are known which substantially comprise a supporting structure fitted to a machine bed; and a spindle fitted to the supporting structure so as to rotate about a respective axis, and in turn integrally supporting a grinding wheel. The spindle, and with it the wheel, is also movable, with respect to the supporting structure, parallel to a first and a second direction intersecting perpendicularly. More specifically, the supporting structure comprises a retaining member supporting the spindle in rotary manner; and a carriage which runs along a straight guide, fitted to the supporting structure and parallel to the first direction, and to which the retaining member is fitted so as to travel in the second direction.

The grinding wheel normally comprises a base disk made of metal and fitted to the spindle; and a work portion made of cubic boron crystal and fixed to the periphery of the disk by means of a ceramic or galvanic bonding agent.

The supporting structure also comprises a supporting device for supporting an axially symmetrical workpiece parallel to the straight guide. The supporting device supports opposite ends of the workpiece, with the axis of the workpiece parallel to the first and crosswise to the second direction, and also provides for rotating the workpiece.

Having only one spindle supporting one grinding wheel at a time, known units call for assembling and disassembling several wheels in the course of a normal grinding cycle, as well as for continually repositioning the workpiece, thus resulting in increased machining time, reduced flexibility, and fairly high cost.

It is an object of the present invention to provide a machining unit for a grinding machine, designed to eliminate the aforementioned drawbacks typically associated with known units.

According to the present invention, there is provided a machining unit for a grinding machine, the unit comprising supporting means fitted to a bed of said machine; and at least one spindle which supports at least one grinding wheel, is connected to said supporting means so as to rotate about a respective axis, and is movable parallel to a first and a second direction intersecting each other; said grinding wheel comprising a base disk made of metal material, and a work portion made of cubic boron crystal and fixed to the periphery of said base disk; characterized in that said supporting means comprise an operating head supporting for rotation a number of said spindles and a number of said grinding wheels; orienting means for rotating said operating head in a plane parallel to said first and said second direction; first translating means for moving said operating head parallel to said first direction; and second translating means for moving said operating head parallel to said second direction; said orienting means and said first and second translating means cooperating with one another to position each of said grinding wheels with respect to an axially symmetrical workpiece for grinding.

Two preferred, non-limiting embodiments of the present invention will be described purely by way of example with reference to the accompanying drawings, in which:
Figure 1 shows a plan view, with parts removed for clarity, of a machining unit for a grinding machine, in accordance with the present invention;
Figure 2 shows a schematic plan view of the Figure 1 unit at one stage in the grinding of an axially symmetrical workpiece;
Figure 3 shows a schematic plan view of the Figure 1 unit at a further stage in the grinding of the Figure 2 workpiece;
Figure 4 shows a plan view, with parts removed for clarity, of a further embodiment of a machining unit for a grinding machine, in accordance with the present invention;
Figure 5 shows a schematic plan view of the Figure 4 unit at one stage in the grinding of an axially symmetrical workpiece of a different type from that in Figure 2.

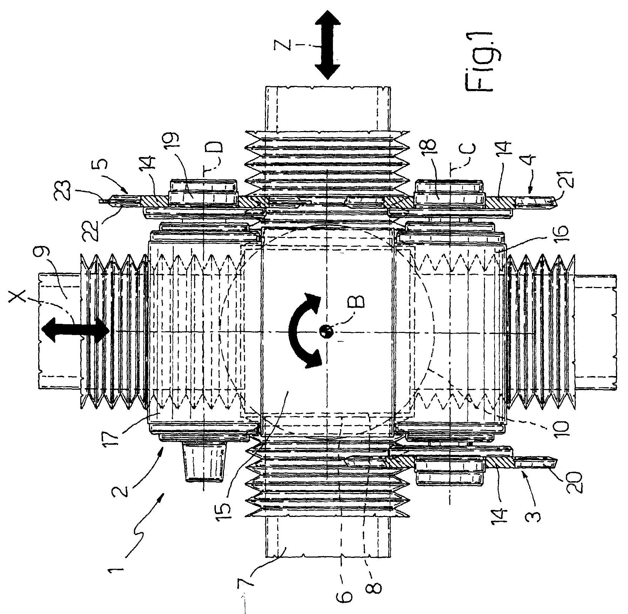

Number 1 in Figures 1 to 3 indicates as a whole a machining unit for a grinding machine (not shown), in accordance with the present invention.

Unit 1 is fitted to a bed (not shown) of the grinding machine, and substantially comprises an operating head 2, which is movable parallel to a first and a second direction Z, X perpendicular to each other, and rotates about a respective vertical axis B perpendicular to directions Z, X; and a number of grinding wheels - in the example shown, three, indicated 3, 4, 5 - fitted in rotary manner to operating head 2.

More specifically, unit 1 comprises a first carriage 6 mounted to run along a respective straight guide 7 formed on the grinding machine bed and extending parallel to direction Z; a second carriage 8 fitted crosswise to carriage 6 and which travels along a respective straight guide 9 formed on carriage 6 and extending parallel to direction X; and a substantially cylindrical movable member 10 of axis B, fitted in rotary manner to carriage 8 and in turn supporting operating head 2.

More specifically, operating head 2 comprises a rectangular central body 15 fitted to movable member 10; and two end bodies 16, 17 extending on opposite sides of body 15. Bodies 16, 17 are engaged by and radially support respective spindles 18, 19 having respective axes C, D parallel to each other and perpendicular to axis B. Each spindle 18, 19 has opposite ends projecting from respective body 16, 17; grinding wheels 3 and 4 are fitted to respective ends of spindle 18; and grinding wheel 5 is fitted to one end of spindle 19, in a position facing grinding wheel 4.

Each grinding wheel 3, 4, 5 comprises a base disk 14 made of metal material; and a respective work portion 20, 21, 22 made of cubic boron crystal and fixed to the periphery of disk 14. Work portions 20, 21 of grinding wheels 3, 4 are fixed to respective disks 14 by means of a ceramic bonding agent, whereas work portion 22 of grinding wheel 5 is fixed to respective disk 14 by means of a galvanic bonding agent. Grinding wheels 3 and 4 have, in cross section, respective lateral profiles substantially in the shape of an inclined V and symmetrical with each other with respect to a plane through axis B and parallel to the planes of grinding wheels 3, 4, and are used for grinding right and left shoulders respectively, and for grinding axial portions.

Work portion 22 of grinding wheel 5 has, on the periphery, a cylindrical intermediate annular projection 23, and is used for forming annular grooves.

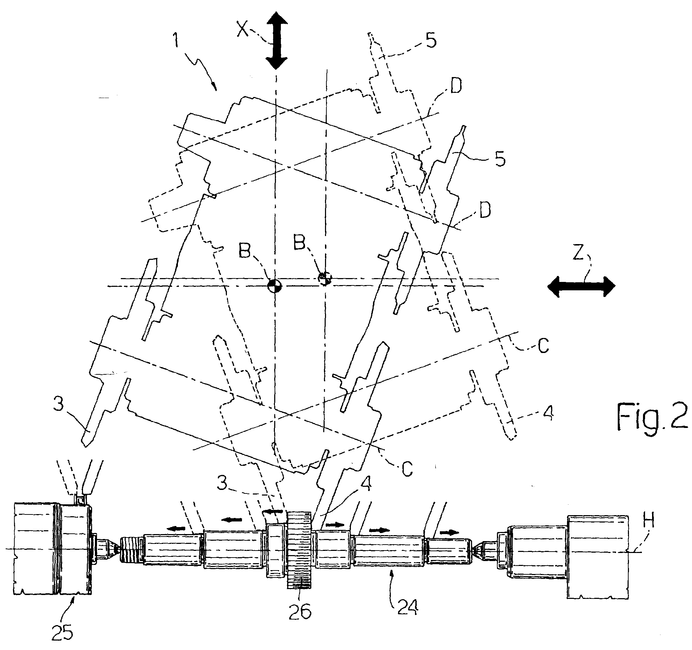

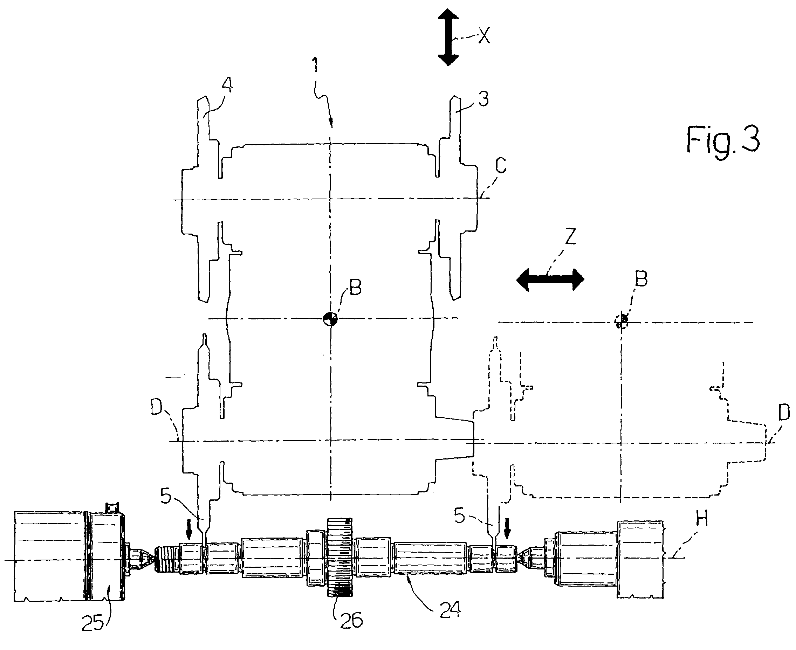

Figures 2 and 3 show an example of a grinding cycle performed by unit 1 on an axially symmetrical workpiece 24, e.g. a vehicle transmission drive shaft.

Workpiece 24 is positioned with its axis H parallel to direction Z, and is supported at opposite ends by a known supporting device 25 which also provides for rotating workpiece 24.

Briefly, workpiece 24 comprises a toothed intermediate portion 26, from the opposite sides of which extend successive axial portions of gradually decreasing diameter.

To perform the grinding cycle, operating head 2 is rotated anticlockwise in Figure 2 about axis B by a predetermined angle - in the example shown, 20° (dash line in Figure 2) - with respect to a reference position in which the axes of grinding wheels 3, 4, 5 are parallel to direction Z (Figure 1). Grinding wheel 3 is thus brought into contact with workpiece 24, and the portion of workpiece 24 to the left of intermediate portion 26 and the relative shoulders are ground by moving operating head 2 successively in directions parallel to directions X and Z.

Subsequently, operating head 2 is rotated clockwise in Figure 2 by the same angle as before (continuous line in Figure 2) with respect to the reference position, so that grinding wheel 4 is brought into contact with workpiece 24, and the portion of workpiece 24 to the right of intermediate portion 26 and the relative shoulders are ground by moving operating head 2 successively in directions parallel to directions X and Z.

Finally, operating head 2 is rotated 180° with respect to the reference position, and is moved parallel to directions X and Z to bring grinding wheel 5 into contact with workpiece 24 and form the desired annular grooves.

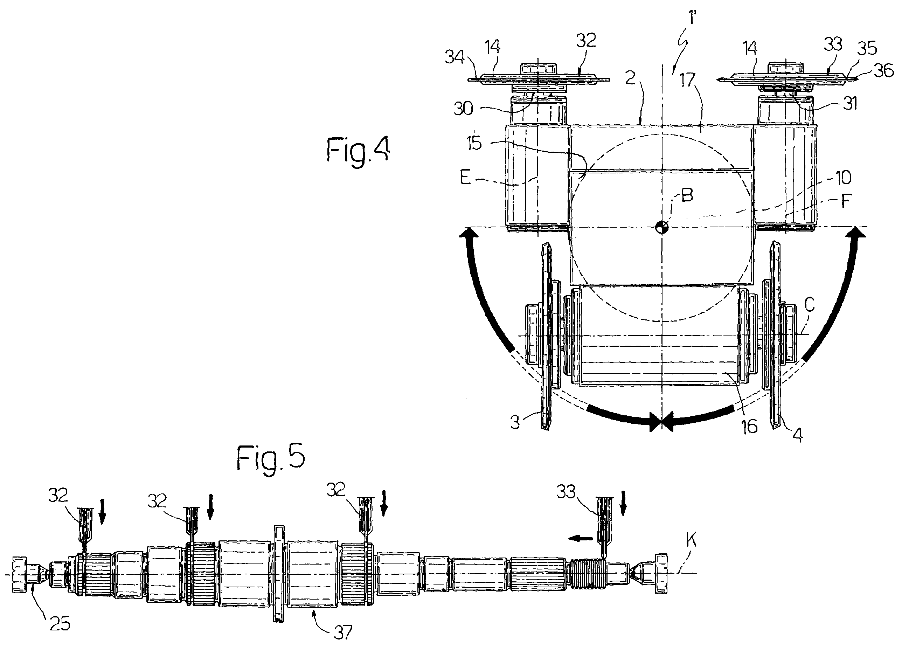

Figures 4 and 5 show a further embodiment of a machining unit for a grinding machine, in accordance with the present invention and indicated as a whole by 1'. In the following description, unit 1' is described only insofar as it differs from unit 1, and using the same reference numbers for any parts identical with or corresponding to those already described.

Unit 1' differs from unit 1 by end body 17 of operating head 2 being engaged by and radially supporting two spindles 30, 31 supporting respective grinding wheels 32, 33 and having respective axes E, F parallel to each other and perpendicular to axes C, D of spindles 18, 19. More specifically, each grinding wheel 32, 33 is fitted to the end of respective spindle 30, 31 projecting from body 17.

Grinding wheels 32, 33 have respective work portions 34, 35 made of cubic boron crystal and fixed to respective base disks 14 of metal material by means of a galvanic bonding agent; grinding wheel 32 is identical with grinding wheel 5; and grinding wheel 33 has, on the periphery, a cylindrical intermediate annular projection 36 having a V-shaped end portion, and is used for threading.

Figure 5 shows, by way of example, a final stage in a grinding cycle performed by unit 1' on an axially symmetrical workpiece 37, e.g. a vehicle transmission drive shaft, similar to workpiece 24 and also supported by the supporting device with the axis K of the workpiece parallel to direction Z.

Workpiece 37 is first machined by grinding wheels 3 and 4 in the same way as shown in Figure 2 relative to unit 1. Operating head 2 is then rotated 90° anticlockwise in Figure 4 with respect to a reference position in which the axes of grinding wheels 3 and 4 are parallel to direction Z, and the axes of grinding wheels 32 and 33 are parallel to direction X (Figure 4). By successively moving operating head 2 in directions parallel to directions X and Z, grinding wheel 32 is brought into contact with workpiece 37 to form the desired annular grooves. Finally, operating head 2 is rotated 90° clockwise in Figure 4 with respect to the reference position, and is moved parallel to directions X and Z to bring grinding wheel 33 into contact with workpiece 37 and form the desired thread.

The advantages of units 1, 1' according to the present invention will be clear from the foregoing description.

In particular, by virtue of operating head 2 comprising a number of spindles (18, 19, 30, 31) and a number of grinding wheels (3, 4, 5, 32, 33) which are brought into contact with the workpiece (24, 37) by simply moving operating head 2, unit 1, 1' provides for a high degree of machining flexibility covering a wide range of workpieces for grinding. Moreover, for each grinding cycle, the workpiece (24, 37) need only be positioned once, by virtue of the various operations being performed by simply moving the spindles (18, 19, 30, 31) parallel to directions Z and X, and rotating the spindles about axis B. All of which obviously reduces both machining time and cost.

Clearly, changes may be made to units 1, 1' as described and illustrated herein without, however, departing from the scope of the accompanying Claims.

## Claims

**1.** A machining unit (1, 1') for a grinding machine, the unit comprising supporting means (2, 6, 7, 8, 9, 10) fitted to a bed of said machine; and at least one spindle (18, 19, 30, 31) which supports at least one grinding wheel (3, 4, 5, 32, 33), is connected to said supporting means (2, 6, 7, 8, 9, 10) so as to rotate about a respective axis (C, D, E, F), and is movable parallel to a first and a second direction (Z, X) intersecting each other; said grinding wheel (3, 4, 5, 32, 33) comprising a base disk (14) made of metal material, and a work portion (20, 21, 22, 34, 35) made of cubic boron crystal and fixed to the periphery of said base disk (14); characterized in that said supporting means comprise an operating head (2) supporting for rotation a number of said spindles (18, 19, 30, 31) and a number of said grinding wheels (3, 4, 5, 32, 33); orienting means (10) for rotating said operating head (2) in a plane parallel to said first and said second direction (Z, X); first translating means (6, 7) for moving said operating head (2) parallel to said first direction (Z); and second translating means (8, 9) for moving said operating head (2) parallel to said second direction (X); said orienting means (10) and said first and second translating means (6, 7; 8, 9) cooperating with one another to position each of said grinding wheels (3, 4, 5, 32, 33) with respect to an axially symmetrical workpiece (24, 37) for grinding.

**2.** A unit as claimed in Claim 1, characterized in that at least two (3, 4) of said grinding wheels are carried by the same said spindle (18).

**3.** A unit as claimed in Claim 1 or 2, characterized in that said grinding wheels (3, 4, 5) are fitted to said operating head (2) with the respective axes parallel to one another.

**4.** A unit as claimed in Claim 1 or 2, characterized by comprising four said grinding wheels (3, 4, 32, 33) fitted to said operating head (2) with the respective axes parallel in pairs, and with the axes in one pair forming a predetermined angle with the axes in the other pair.

**5.** A unit as claimed in any one of the foregoing Claims, characterized in that said first and second translating means comprise a first and a second carriage (6, 8) mounted crosswise with respect to each other and traveling respectively along first and second guide means (7, 9) parallel to said first and second direction (Z, X) respectively.

**7.** A unit as claimed in Claim 6, characterized in that said first guide means (7) are carried by said bed of said machine; and in that said second guide means (9) are carried by said first carriage (6).

**8.** A unit as claimed in Claim 6 or 7, characterized in that said orienting means comprise a movable member (10) carried by said second carriage (8) and in turn carrying said operating head (2).

**9.** A unit as claimed in any one of the foregoing Claims, characterized in that said work portion (22, 34, 35) of at least one of said grinding wheels (5, 32, 33) is fixed to the respective said base disk by means of a galvanic bonding agent.

**10.** A unit as claimed in any one of the foregoing Claims, characterized in that said work portion (20, 21) of at least one of said grinding wheels (3, 4) is fixed to the respective said base disk by means of a ceramic bonding agent.
